# EUROPEAN PATENT SPECIFICATION

(11) **EP 3 767 980 B1**
(45) Date of publication and mention of the grant of the patent: **22.09.2021**
(21) Application number: 19186283.8
(22) Date of filing: 15.07.2019
(51) Int. Cl.: H04W 4/90

(54) **METHOD FOR USING AN IN-VEHICLE SYSTEM IN AT LEAST A FIRST AND A SECOND COUNTRY OR GEOGRAPHIC REGION WITHIN A COUNTRY, AND IN-VEHICLE SYSTEM**
VERFAHREN ZUR VERWENDUNG EINES FAHRZEUGINTERNEN SYSTEMS IN MINDESTENS EINEM ERSTEN UND EINEM ZWEITEN LAND ODER EINER GEOGRAFISCHEN REGION INNERHALB EINES LANDES, UND FAHRZEUGINTERNES SYSTEM
PROCÉDÉ D'UTILISATION D'UN SYSTÈME EMBARQUÉ DANS AU MOINS UN PREMIER ET UN SECOND PAYS OU UNE ZONE GÉOGRAPHIQUE À L'INTÉRIEUR D'UN PAYS ET SYSTÈME EMBARQUÉ

(43) Date of publication of application: 20.01.2021
(73) Proprietor: Deutsche Telekom AG, 53113 Bonn (DE)
(72) Inventor: BÜCHTER, Martin, 53840 Troisdorf (DE); LAUSTER, Reinhard, 3100 St. Pölten (AT)
(74) Representative: Schwöbel, Thilo K.

(56) References cited:
- EP-A1- 2 900 015
- EP-A1- 2 947 856
- US-A1- 2017 048 713

## Description

### BACKGROUND

The present invention relates a method for using an in-vehicle system in at least a first and a second country or geographic region within a country, the in-vehicle system comprising at least one identity module with at least one secure element, the at least one secure element comprising one or a plurality of USIM profiles, each one of these USIM profiles being uniquely identified by one corresponding ICCID, integrated circuit card identifier, wherein the at least one secure element comprises at least a first USIM profile, universal subscriber identity module profile, wherein at least one USIM profile is used as an emergency USIM profile, this emergency USIM profile being used in case that an emergency call is initiated or has to be initiated by the in-vehicle system, to connect the in-vehicle system to an emergency handling instance or emergency handling node.

Furthermore, the present invention relates to an in-vehicle system to be used in at least a first and a second country or geographic region within a country, wherein the in-vehicle system comprises at least one identity module with at least one secure element, the at least one secure element comprising one or a plurality of USIM profiles, each one of these USIM profiles being uniquely identified by one corresponding ICCID, integrated circuit card identifier, wherein the at least one secure element comprises at least a first USIM profile, universal subscriber identity module profile, wherein at least one USIM profile is used as an emergency USIM profile, this emergency USIM profile being used in case that an emergency call is initiated or has to be initiated by the in-vehicle system, to connect the in-vehicle system to an emergency handling instance or emergency handling node.

Furthermore, the present invention relates to a program and to a computer program product for using a mobile terminal in a mobile communication network.

The term eCall refers to a European initiative intended to bring early assistance to road users especially involved in a collision anywhere in the European Union. Nowadays, eCall is a mandatory feature in all new cars sold in the European Union.

In some geographic areas or countries, local (national or regional) regulation requires that for certain communication services (e.g. emergency call, eCall, M2M) specific requirements are to be respected in view of SIM profiles used, especially such as that only local SIM profiles are allowed, i.e. the use of at least specific, typically foreign SIM profiles is not allowed. Additionally in several countries permanent roaming restrictions prohibit the long term use of foreign SIM profiles.

In order to comply with such regulatory restrictions, specific hardware and/or software solutions or specific configurations are typically required that are to be used in or for vehicles in or for the respective countries or geographic areas, which substantially increases costs in order to provide the original equipment components and software as well as the operational costs to provide corresponding services. Especially, in countries where the usage of a specific (e.g. local) SIM Profile is mandatory for certain services, or where other requirements apply, the conventionally known approach implies:
-- substantially increased cost and complexity, especially for the respective mobile network operator, in order to comply with such regulatory requirements, thus, also increasing the respective costs for the automotive original equipment manufacturer;
-- renders impossible or at least makes a lot more cumbersome to manage commercial services provided, e.g., by the automotive original equipment manufacturer and/or the mobile network operator;
-- that an efficient deployment of global products and services, using only a dedicated preconfigured unique SIM profile, is either impossible or at least a lot more difficult.

EP 2 947 856 A1 discloses a telematics controller, which includes: a vehicle information collecting unit that collects vehicle information about a vehicle mounted with the telematics controller; a SIM switching unit that enables one of a plurality of SIM interfaces to communicate; and a switching instructing unit that instructs the SIM switching unit to switch the SIM interface to a SIM interface associated in advance according to the vehicle information collected by the vehicle information collecting unit.

EP 2 900 015 A1 relates to a method for dynamically influencing the choice of a mobile network operator profile used by a user equipment connected to a telecommunications network.

### SUMMARY

An object of the present invention is to provide an effective and simple solution such that an in-vehicle system (or a user equipment being used in or in connection with a vehicle such that the user equipment together with the vehicle are forming an in-vehicle system) is able to be built, provided as well as used in a more effective manner while nevertheless complying with all national or regional regulatory requirements, especially regarding the implementation of emergency-related or non-emergency-related communication needs, of either the road users or passengers of vehicles involved or regarding, e.g. configurations, updates and/or malfunctions of the vehicle itself.

The object of the present invention is achieved by a method according to claim 1.

According to the present invention, it is advantageously possible that all regulatory restrictions or requirements (such as, e.g., the mandatory use of certain (especially only local) SIM profiles in certain countries, or restrictions regarding permanent roaming) are able to be complied with, while nevertheless providing the possibility to manage commercial services provided in a comparably easy and efficient manner (especially by the automotive original equipment manufacturer and/or the mobile network operator), and to allow for an efficient deployment of global products and services using a dedicated preconfigured unique SIM profile.

Examples of regulatory restrictions or requirements especially include countries that require that vehicles enabled for eCall (i.e. to place, especially automatically, emergency calls or regulatory emergency calls) necessarily need to be equipped with local SIM profiles, i.e. SIM profiles of the respective country having such a requirement, like, e.g., in Brazil or Turkey. Hence, a mobile network operator, in order to comply with such a requirement, might need to run or own or co-own or cooperate with a local mobile network operator in the respective country, or a mobile virtual network operator. A further example of such regulatory restrictions or requirements relates to the requirement that all backend platforms regarding emergency calls (such as eCall backend platforms) need to be located in the respective country (such as Turkey, for instance). This in turn makes it impossible, e.g., to use a centralized service platform - such as, e.g., TMSP (Telekom M2M Service Platform) - for providing commercial services, and, hence, removing the possibility to provide (and to commercialize) a global "one stop shopping" approach covering almost all relevant markets and being able to provide an almost worldwide service.

Historically, the design of regulatory emergency call systems, especially in vehicles, assumed (especially in case of the eCall system) that it is possible to comply with the regulatory requirements by deploying vehicles having a single SIM profile for both emergency calls and commercial services. As the examples show, this assumption no longer holds such that both the complexity and the costs of deploying and operating emergency call systems, such as eCall systems, will rise. Even though other emergency call systems, such as NIS ERA GLONAS, might have been designed assuming that a vehicle is equipped with two SIM profiles, it would not provide remedies (in view of a centralized service platform for providing commercial services and/or providing a global "one stop shopping" approach) in the mentioned situations of regulatory requirements.

According to the present invention, a method for using an in-vehicle system is disclosed which should be able to be used or usable in as many countries as possible worldwide and using, as much as possible, one single original configuration and/or software and/or hardware complying with as many national or regional regulatory requirements as possible. Hence, this means that the in-vehicle system should be used in at least a first and a second country or geographic region within a country (but advantageously in many other countries or geographic regions. According to the present invention, such an in-vehicle system is equipped with (or comprises) at least one identity module with at least one secure element. The at least one secure element comprises one or a plurality of USIM profiles, each one of these USIM profiles being uniquely identified by one corresponding ICCID, integrated circuit card identifier. The at least one secure element comprises at least a first USIM profile, universal subscriber identity module profile. At least one USIM profile is designated as an emergency USIM profile, this emergency USIM profile being used in case that an emergency call is initiated or has to be initiated by the in-vehicle system, to connect the in-vehicle system to an emergency handling instance or emergency handling node.
It is assumed according to the present invention that in a first country or geographic region a first USIM profile is able to be used (as the emergency USIM profile) and that - e.g. for regulatory reasons - in a second country or geographic region a second USIM profile needs to be used by the in-vehicle system (as the emergency USIM profile); hence, in case that the in-vehicle system is used in the first country or geographic region, the first USIM profile is initialized or prepared or activated to be used, by the in-vehicle system, as the emergency USIM profile. In case that the in-vehicle system is used in the second country or geographic region, the second USIM profile is initialized or prepared or activated to be used, by the in-vehicle system, as the emergency USIM profile. In case that the second USIM profile is not yet loaded or stored or comprised in the secure element of the in-vehicle system, it needs to be retrieved or downloaded or received upon the in-vehicle system approaching or entering the second country or geographic region. According to the present invention the method comprises that the fact (i.e. the determination or detection, by the vehicle or by the in-vehicle system or by any other sensor or data source) that the in-vehicle system is approaching to enter or entering the second country or geographic region is determined (in a first step), and; in a second step, subsequent to the first step, the second USIM profile is initialized or prepared or activated to be used, by the in-vehicle system, as the emergency USIM profile, and, accordingly, the first USIM profile is deactivated to be used as the emergency USIM profile.

Hence, according to the present invention, an automatic and non-static selection and switching of a SIM profile (or USIM profile) is provided, which is conditional to an analysis and assessment regarding especially the location of the in-vehicle system. Especially, the automatic and non-static selection and switching of USIM profile is provided conditional to the analysis and assessment of available credentials according to criteria and data available in the in-vehicle system (or mobile equipment) and according to the conditions in which the service is initiated. According to the present invention, the term "switching of a USIM profile" or "switching of the emergency USIM profile" corresponds to a setting or a configuration that is primarily made or stored in the in-vehicle system; it is able to encompass a corresponding registration or attachment with a mobile communication network, but in any case it does not need to encompass that the considered USIM profile and/or emergency USIM profile is actually registered and/or attached and/or connected with a mobile communication network (or its respective access network); hence a USIM profile or emergency USIM profile might be "switched on" or activated (to be the default emergency USIM profile), within the in-vehicle system, while permanently (during a considered time interval) being unregistered or un-attached to the corresponding mobile communication network (e.g. because no emergency situation arose during the considered time interval). The invention also relates to an in-vehicle system as defined in claim 11 and to a program and computer program product as defined in claims 12 and 13. Further detailed embodiments are defined in the dependent claims.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrate an in-vehicle system according to the present invention, being located in a coverage area of a first mobile communication network (of a first country or geographic area) and being potentially moving towards the coverage area of a second mobile communication network (of a second country or geographic area).
**Figure 2** schematically illustrates the method and an in-vehicle system according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

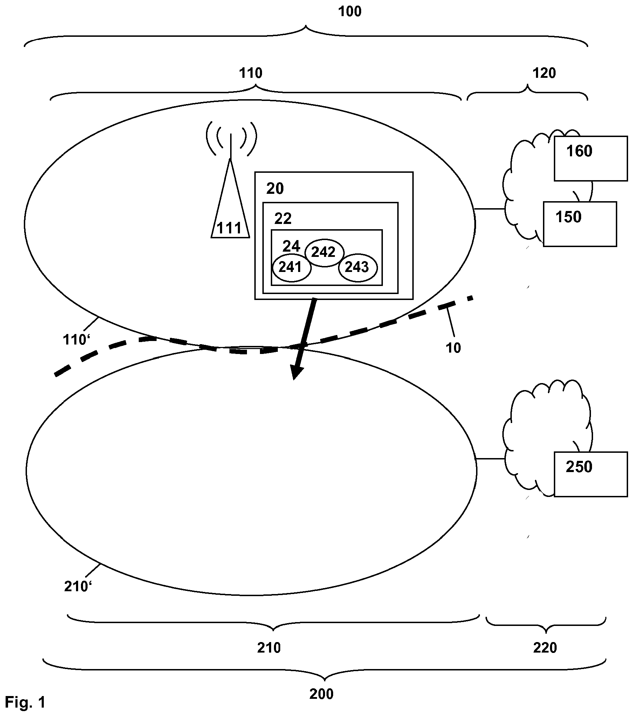

In Figure 1, a first mobile communication network 100 such as a public land mobile network is schematically shown together with a second mobile communication network 200, likewise typically a public land mobile network. A border 10 between a first country (or geographic area) above the border 10 and a second country (or geographic area) below the border 10 is schematically indicated. Roughly, the first mobile communication network 100 covers or intends to cover the first country or geographic area (above the border 10), and the second mobile communication network 200 covers or intends to cover the second country or geographic area (below the border 10). The first mobile communication network 100 comprises a first access network 110 and a first core network 120, and likewise the second mobile communication network 200 comprises a second access network 210 and a second core network 220. Both mobile communication networks 100, 200 typically comprise a plurality of network cells or radio cells, one of which is only schematically represented in Figure 1, a first radio cell 110' (having a base station entity 111) as part of the first mobile communication network 100, and a second radio cell 210' (having also a base station entity but which is not represented in Figure 1) as part of the second mobile communication network 200. The first mobile communication network 100 comprises a first emergency handling instance or emergency handling node 150 assigned to the first country or geographic region, and the second mobile communication network 200 comprises a second emergency handling instance or emergency handling node 250 assigned to the second country or geographic region. Furthermore, the first mobile communication network 100 comprises or is able to connect to a service provider instance or service provider node 160.

An in-vehicle system 20 is schematically shown, in Figure 1, being located in the coverage area of the first mobile communication network 100 (as well as being located in the first country or geographical area and in the coverage area of the first radio cell 110') and moving towards the second country (or at least towards the border between the first and second countries), indicated by an arrow in Figure 1. The in-vehicle system 20 comprises an identity module 22 with a secure element 24. The in-vehicle system 20 might comprise further identity modules (besides the identity module 22) and/or further secure elements (besides the secure element 24).

The secure element 24 comprises at least one USIM profile (or universal subscriber identity module profile), but preferably the secure element 24 comprises a plurality of USIM profiles. Whatever the number of USIM profiles, each one of these USIM profiles is uniquely identified by one corresponding ICCID or integrated circuit card identifier.

In order to differentiate the possible plurality of USIM profiles (or the only one USIM profile) of the secure element 24, these USIM profiles are labelled by "first", "second", etc. Hence, the at least one secure element 24 comprises at least a first USIM profile 241. In the exemplary embodiment shown in Figure 1, the secure element 24 is shown to have or to comprise also a second USIM profile 242, and a third USIM profile 243.

At least one (and typically exactly one) USIM profile (of the plurality of the USIM profiles) is used (or defined) as an emergency USIM profile (or rather - as typically there is exactly one USIM defined or used as emergency USIM profile - the emergency USIM profile), this emergency USIM profile being defined or assigned to be used in case that an emergency call is initiated or has to be initiated, by the in-vehicle system 20, i.e. to connect the in-vehicle system 20 to an emergency handling instance or emergency handling node. While a plurality of USIM profiles might, in principle, be used as emergency USIM profiles, there is typically only one designated (or assigned) emergency USIM profile being used (as emergency USIM profile) in case that an emergency call needs to be placed, i.e. which one (of a plurality of USIM profiles present in the secure element 24) is defined or assigned to be the emergency USIM profile (of the secure element 24 and, hence, of the in-vehicle system 20) might change, but in any case one of the possibly plurality of USIM profiles is always designated or assigned to be the emergency USIM profile. According to the present invention, it is assumed that - in case that the in-vehicle system 20 is used in the first country or geographic region - the first USIM profile 241 is initialized or prepared or activated to be used, by the in-vehicle system 20, as the (defined or assigned) emergency USIM profile, whereas - in case that the in-vehicle system 20 is used in the second country or geographic region - the second USIM profile 242 is initialized or prepared or activated to be used, by the in-vehicle system (20), as the (defined or assigned) emergency USIM profile. In case that (at the time of crossing the border 10 or approaching the border 10) the second USIM profile 242 is not comprised by the secure element 24, the second USIM profile 242 needs to be received by (or otherwise transmitted) the in-vehicle system 20 upon the in-vehicle system 20 approaching or entering the second country or geographic region. Then, according to the present invention, in a first step, this situation (i.e. the in-vehicle system 20 approaching or entering the second country or geographic region) is detected or determined, by the in-vehicle system 20 (or otherwise detected, e.g. by the vehicle, and communicated to the in-vehicle system 20), and in a second step, subsequent to the first step, the second USIM profile 242 is initialized or prepared or activated to be used, by the in-vehicle system 20, as the (assigned or defined) emergency USIM profile, and the first USIM profile 241 is deactivated to be used (i.e. de-assigned) as the emergency USIM profile. According to the present invention, this switch (or change) of the emergency USIM profile occurs independently from whether an emergency situation applies or not. Thereby, it is advantageously possible to comply with the regulatory requirement - within the second country or geographic area - to mandatorily use a specific USIM profile (i.e. the second USIM profile) as the emergency USIM profile (in case that an emergency situations requires the in-vehicle system 20 to place an emergency call or to trigger an emergency procedure), and nevertheless to use, in an emergency situation, the first USIM profile in the first country (and typically also in other countries other than the second country) as the designated or assigned emergency USIM profile.

In case that such an emergency situation applies and the in-vehicle system 20 is used (or located) in the first country or geographic region, the emergency USIM profile (i.e. the first USIM profile) is used to connect the in-vehicle system 20 to the first emergency handling instance or emergency handling node 150 (which is typically assigned to the first country or geographic region). However, if such an emergency situation applies and the in-vehicle system 20 is used in the second country or geographic region, the emergency USIM profile (i.e. the second USIM profile) is used to connect the in-vehicle system 20 to the second emergency handling instance or emergency handling node 250 (which is typically assigned to the second country or geographic region).

According to a further variant of the present invention, the first USIM profile 241 might also be initialized or prepared or activated to be used as a commercial USIM profile (in addition to being used as the emergency USIM profile), this commercial USIM profile being used in case that especially a commercial exchange of data or a commercial call is initiated or has to be initiated by the in-vehicle system 20 in order to connect to a service provider instance or service provider node 160. However, according to still a further variant of the present invention the secure element 24 has a third USIM profile 243 to be used, by the in-vehicle system 20, as the commercial USIM profile. In this case, the secure element 24 might either already comprise the third USIM profile 243, or the third USIM profile 243 is provisioned to the in-vehicle system 20 (i.e. the in-vehicle system 20 or the secure element 24 receives the third USIM profile (243).

According to a further variant of the present invention, the secure element 24 or, more generally, the in-vehicle system 20, comprises an information, especially in form of an assignment table, such that a plurality of different USIM profiles (that are potentially used as emergency USIM profiles) are assigned to (or related to) a plurality of different countries or geographic regions within a country. In case that it is detected that the in-vehicle system 20 is located within a country (such as the second country) to which a different emergency USIM profile is assigned (in or according to the assignment table) than the currently defined or assigned USIM profile, the assignment or the definition of the emergency USIM profile is switched such in a manner analogous to the transision of the in-vehicle system 20 from the first country to the second country and the switch of the emergency USIM profile from the first USIM profile to the second USIM profile. Especially, in the assignment table, a USIM profile (such as the first USIM profile) is assigned to a plurality of different countries or geographic regions, and a further USIM profile (such as the second USIM profile) is assigned to a specific country or geographic region (such as the second country) where it is regulatorily required to use the further USIM profile.

According to still a further variant of the present invention, while the regulatory requirement within the second country of geographical area might require to use the second USIM profile as the emergency USIM profile (i.e. in case of an emergency situation, the second USIM profile (as the assigned or defined emergency USIM profile upon entering the second country) is used while the in-vehicle system 20 being located in the second country or geographic area), it might nevertheless be regulatorily possible (even while the in-vehicle system 20 being located in the second country or geographical area) to use the first USIM profile 241 or the third USIM profile 243 for commercial purposes, i.e. to connect the in-vehicle system 20 to the service provider instance or service provider node 160.

Hence, according to the present invention, an automatic non-static selection and switching of a SIM Profile (or, rather, USIM profile) is provided, conditional to an analysis and assessment of available credentials according to criteria and data available in the in-vehicle system 20 (or mobile equipment) and according to the conditions in which the service is initiated.

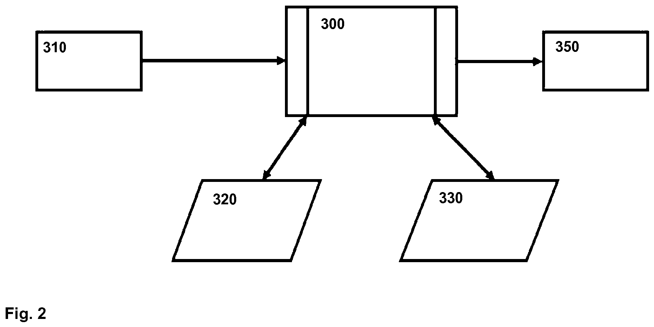

Figure 2 schematically illustrates the method and/or an in-vehicle system according to the present invention. In a first processing step 310, a call trigger, especially an emergency call trigger, is detected, e.g. either a manual emergency call trigger is detected (i.e. the emergency call button (or "eCall button") is pressed or activated by a passenger of the respective vehicle) or an automatic emergency call trigger is detected (i.e. triggered by, e.g. an airbag device is released in the vehicle and/or an acceleration above a certain threshold is detected. In a second processing step 300, the respective USIM profile (for the above mentioned call trigger of the first processing step 310) is activated dependent on the respective requirement, i.e. in case that the call trigger indicates that an emergency call should be placed or initiated, then the emergency USIM profile is activated (i.e. the first or second USIM profile 241, 242, dependent, especially, on whether the in-vehicle system 20 is located in the first or second country), and, e.g., in case that the call trigger indicates that a commercial call should be placed or initiated by the in-vehicle system 20, then the commercial USIM profile is activated. In a third processing step 330, the respective call is initiated. Especially according to the present invention, the determination in the second processing step 300 (i.e. which USIM profile to use or activate) entails to take some information into consideration such as the location 320 (of the in-vehicle system 20) and/or profile information 330 (such as information on or about the available USIM profiles and/or the assignment table).
This means, that especially the following applies according to the present invention:
In case a call is triggered (first processing step 310), a function determines the location 320, and the location information is assessed against parameters to determine whether the configured SIM Profile is appropriate to suit the local requirements (second processing step 300). In practice, the most appropriate SIM profile or USIM profile is able to depend from variables e.g. like time of day, region within the country and others. Lists (such as the assignment table) comprising data to determine the appropriate USIM profile are able to be consulted. In case that the in-vehicle system 20 is registered to the mobile communication network for commercial services, the PLMN ID of the mobile communication network (indicating the country in which the call is triggered) is assessed.
In a second step location data gained from the GNSS (global navigation satellite system) and contained in the MSD (minimum set of data) might be used to verify the location information of the in-vehicle system 20. Provided the assessment in the in-vehicle system 20 determines that the in-vehicle system 20 is in a country which requires a specific (e.g. local) USIM profile, the in-vehicle system 20 dynamically switches to the appropriate USIM profile. In addition, the in-vehicle system 20 might determine what type or method of emergency call is feasible and choose the most appropriate type (traditional voice emergency call, eCall).
In case that the in-vehicle system 20 is in dormant mode (i.e. not registered in the mobile communication network), first the location data gained from the global navigation satellite system and contained in the MSD (minimum set of data) is assessed (the longitude and latitude contained in the MSD allows to identify the location). Secondly, the PLMN ID of the network taking the call might be used to verify the location information and determine what type of emergency call is feasible (traditional voice emergency call, eCall) and choose the most appropriate profile.
When registered to the mobile communication network, the PLMNID is permanently available to determine / doublecheck the location. To doublecheck the location information stemming from the MSD, the PLMNID of the serving network can be deployed as soon as it is available during a registration attempt when in limited service mode.

According to the present invention, the following benefits are able to be realized compared to conventionally known systems:
emergency calls (such as eCalls) and/or voice emergency calls can be configured such as to comply with local (regulatory) requirements while nevertheless allowing commercial services based on agreements amongst the MNOs (mobile network operators). The method may as well be beneficial, in order to allow to deploy a USIM profile that is eligible to fully register to the network and so enabling CLIP and thus Call-Back. Furthermore, the Mobile Terminal-based (i.e. in-vehicle system-based) analysis to perform a decision which USIM profile to use can either be run on: the eUICC and/or on the in-vehicle system (e.g. in the eCall-system in the vehicle) and/or on an app(lication) run on the mobile equipment or in-vehicle system 20. The analysis and assessment of the locally available data can, according to the present invention, be carried out either in dormant mode of the in-vehicle system 20, or in the active state (i.e. while registered to the network).

## Claims

1. Method for using an in-vehicle system (20) in at least a first and a second country or geographic region within a country,
wherein the in-vehicle system (20) comprises at least one identity module (22) with at least one secure element (24), the at least one secure element (24) comprising one or a plurality of USIM profiles, each one of these USIM profiles being uniquely identified by one corresponding ICCID, integrated circuit card identifier, wherein the at least one secure element (24) comprises at least a first USIM profile (241), universal subscriber identity module profile,
wherein at least one USIM profile is used as a designated emergency USIM profile, this emergency USIM profile being used in case that an emergency call is initiated or has to be initiated by the in-vehicle system (20), to connect the in-vehicle system (20) to an emergency handling instance or emergency handling node,
wherein, in case that the in-vehicle system (20) is used in the first country or geographic region, the first USIM profile (241) is initialized or prepared or activated to be used, by the in-vehicle system (20), as the emergency USIM profile,
wherein, in case that the in-vehicle system (20) is used in the second country or geographic region, a second USIM profile (242) is initialized or prepared or activated to be used, by the in-vehicle system (20), as the emergency USIM profile, the second USIM profile (242) being received by the in-vehicle system (20) upon the in-vehicle system (20) approaching or entering the second country or geographic region,
the method comprising the following steps:
-- in a first step, approaching to enter or entering of the second country or geographic region by the in-vehicle system (20) is determined,
-- in a second step, subsequent to the first step, the received second USIM profile (242) is initialized or prepared or activated to be used, by the in-vehicle system (20), as the emergency USIM profile , and the first USIM profile (241) is deactivated to be used as the emergency USIM profile.

2. Method according to claim 1, wherein, in case that the in-vehicle system (20) is used in the first country or geographic region, the emergency USIM profile is used to connect the in-vehicle system (20) to a first emergency handling instance or emergency handling node (150) assigned to the first country or geographic region, and wherein, in case that the in-vehicle system (20) is used in the second country or geographic region, the emergency USIM profile is used to connect the in-vehicle system (20) to a second emergency handling instance or emergency handling node (250) assigned to the second country or geographic region.

3. Method according to one of the preceding claims, wherein the in-vehicle system (20), while being located in the second country or geographic region, is regulatorily required to use the second USIM profile (242) in order to connect to the second emergency handling instance or emergency handling node (250).

4. Method according to one of the preceding claims, wherein the first USIM profile (241) is, in addition to being initialized or prepared or activated to be used, by the in-vehicle system (20), as the emergency USIM profile, also initialized or prepared or activated to be used, by the in-vehicle system (20), as a commercial USIM profile, this commercial USIM profile being used in case that especially a commercial exchange of data or a commercial call is initiated or has to be initiated by the in-vehicle system (20), to connect the in-vehicle system (20) to a service provider instance or service provider node (160).

5. Method according to one of the preceding claims, wherein the at least one secure element (24) either comprises a third USIM profile (243) or is provisioned by or receives a third USIM profile (243), wherein the third USIM profile (243) is initialized or prepared or activated to be used, by the in-vehicle system (20), as a commercial USIM profile, this commercial USIM profile being used in case that especially a commercial exchange of data or a commercial call is initiated or has to be initiated by the in-vehicle system (20), to connect the in-vehicle system (20) to a service provider instance or service provider node (160).

6. Method according to one of the preceding claims, wherein the in-vehicle system (20), especially the secure element (24) of the in-vehicle system (20), comprises an information, especially in form of an assignment table, wherein a plurality of different USIM profiles, to be used as emergency USIM profiles, are assigned to a plurality of different countries or geographic regions within a country, wherein especially in this assignment table, a USIM profile is assigned to a plurality of different countries or geographic regions, and a further USIM profile is assigned to a country or geographic region where it is regulatorily required to use the further USIM profile.

7. Method according to one of the preceding claims, wherein the choice of the second USIM profile (242) among a plurality of different USIM profiles is dependent on a time stamp information.

8. Method according to one of the preceding claims, wherein the determination of either approaching to enter, or entering the second country or geographic region is based on at least one out of the following events or pieces of information:
-- the in-vehicle system (20) detects the presence or availability of the second local access network (210) or of the second mobile communication network (200), especially by means of the corresponding PLMN ID information, public land mobile network identity information,
-- the in-vehicle system (20) connects to the second local access network (210) or of the second mobile communication network (200),
-- the position of the in-vehicle system (20) obtained by using a global navigation satellite system indicates that the in-vehicle system (20) either approaches the second country or geographic region or that the in-vehicle system (20) enters the second country or geographic region.

9. Method according to one of the preceding claims, wherein initializing or preparing or activating the second USIM profile (242), and deactivating the first USIM profile (241) is triggered by the determination of the in-vehicle system (20) approaching to enter or entering of the second country or geographic region, only, and especially does not require an emergency call to be actually initiated or to be required to be initiated, as it is especially the case if an accident occurs.

10. Method according to one of the preceding claims, wherein the decision of the in-vehicle system (20) either approaching to enter, or entering the second country or geographic region is taken by either
-- the identity module (22) and/or the secure element (24), especially the eUICC, embedded universal integrated circuit card, of the in-vehicle system (20), and/or
-- the in-vehicle system (20) or its mobile equipment, and/or
-- an application run on the in-vehicle system (20) or its mobile equipment, and wherein this decision of the in-vehicle system (20) either approaching to enter, or entering the second country or geographic region is able to be taken while the in-vehicle system (20) or its mobile equipment is either in dormant mode or in active state.

11. In-vehicle system (20) to be used in at least a first and a second country or geographic region within a country,
wherein the in-vehicle system (20) comprises at least one identity module (22) with at least one secure element (24), the at least one secure element (24) comprising one or a plurality of USIM profiles, each one of these USIM profiles being uniquely identified by one corresponding ICCID, integrated circuit card identifier, wherein the at least one secure element (24) comprises at least a first USIM profile (241), universal subscriber identity module profile,
wherein at least one USIM profile is used as a designated emergency USIM profile, this emergency USIM profile being used in case that an emergency call is initiated or has to be initiated by the in-vehicle system (20), to connect the in-vehicle system (20) to an emergency handling instance or emergency handling node, wherein, the in-vehicle system is configured to:
in case that the in-vehicle system (20) is used in the first country or geographic region, the first USIM profile (241) is initialized or prepared or activated to be used, by the in-vehicle system (20), as the emergency USIM profile, and
in case that the in-vehicle system (20) is used in the second country or geographic region, a second USIM profile (242) is initialized or prepared or activated to be used, by the in-vehicle system (20), as the emergency USIM profile, the second USIM profile (242) being received by the in-vehicle system (20) upon the in-vehicle system (20) approaching or entering the second country or geographic region,
wherein the in-vehicle system (20) is configured such that:
-- approaching to enter or entering of the second country or geographic region by the in-vehicle system (20) is determined,
-- the received second USIM profile (242) is initialized or prepared or activated to be used, by the in-vehicle system (20), as the emergency USIM profile, and the first USIM profile (241) is deactivated to be used as the emergency USIM profile.

12. Program comprising a computer readable program code which, when executed on a computer or on an identity module (22) and/or on a secure element (24) of an in-vehicle system (20) and/or on an in-vehicle system (20) or its mobile equipment, causes the computer or the identity module (22) or the secure element (24) or the in-vehicle system (20) to perform a method according one of claims 1 to 10.

13. Computer program product for using an in-vehicle system (20) in at least a first and a second country or geographic region within a country, the computer program product comprising a computer program stored on a storage medium, the computer program comprising program code which, when executed on a computer or on an identity module (22) and/or on a secure element (24) of an in-vehicle system (20) and/or on an in-vehicle system (20) or its mobile equipment, causes the computer or the identity module (22) or the secure element (24) or the in-vehicle system (20) to perform a method according one of claims 1 to 10.

## Patentansprüche

1. Verfahren zum Verwenden eines fahrzeuginternen Systems (20) in mindestens einem ersten und einem zweiten Land oder einer ersten und einer zweiten geografischen Region innerhalb eines Landes,
wobei das fahrzeuginterne System (20) mindestens ein Identitätsmodul (22) mit mindestens einem sicheren Element (24) umfasst, wobei das mindestens eine sichere Element (24) ein oder mehrere USIM-Profile umfasst, wobei jedes dieser USIM-Profile durch einen entsprechenden Integrated Circuit Card Identifier (ICCID) eindeutig identifiziert wird, wobei das mindestens eine sichere Element (24) mindestens ein erstes Universal Subscriber Identity Module (USIM)-Profil (241) umfasst,
wobei mindestens ein USIM-Profil als ein designiertes Notfall-USIM-Profil verwendet wird, wobei dieses Notfall-USIM-Profil für den Fall verwendet wird, dass ein Notruf durch das fahrzeuginterne System (20) initiiert wird oder initiiert werden muss, um das fahrzeuginterne System (20) mit einer Notfallbearbeitungsinstanz oder einem Notfallbearbeitungsknoten zu verbinden,
wobei für den Fall, dass das fahrzeuginterne System (20) in dem ersten Land oder der ersten geografischen Region verwendet wird, das erste USIM-Profil (241) initialisiert oder vorbereitet oder aktiviert wird, um durch das fahrzeuginterne System (20) als das Notfall-USIM-Profil verwendet zu werden, wobei für den Fall, dass das fahrzeuginterne System (20) in dem zweiten Land oder der zweiten geografischen Region verwendet wird, ein zweites USIM-Profil (242) initialisiert oder vorbereitet oder aktiviert wird, um durch das fahrzeuginterne System (20) als das Notfall-USIM-Profil verwendet zu werden, wobei das zweite USIM-Profil (242) durch das fahrzeuginterne System (20) empfangen wird, wenn sich das fahrzeuginterne System (20) dem zweiten Land oder der zweiten geografischen Region nähert oder in das zweite Land oder die zweite geografische Region eintritt,
wobei das Verfahren die folgenden Schritte umfasst:
- in einem ersten Schritt wird die Annäherung an, oder der Eintritt in, das zweite Land oder die zweite geografische Region durch das fahrzeuginterne System (20) bestimmt,
- in einem zweiten Schritt, im Anschluss an den ersten Schritt, wird das empfangene zweite USIM-Profil (242) initialisiert oder vorbereitet oder aktiviert, um durch das fahrzeuginterne System (20) als das Notfall-USIM-Profil verwendet zu werden, und das erste USIM-Profil (241) wird deaktiviert, um als das Notfall-USIM-Profil verwendet zu werden.

2. Verfahren nach Anspruch 1, wobei für den Fall, dass das fahrzeuginterne System (20) in dem ersten Land oder der ersten geografischen Region verwendet wird, das Notfall-USIM-Profil verwendet wird, um das fahrzeuginterne System (20) mit einer ersten Notfallbearbeitungsinstanz oder einem ersten Notfallbearbeitungsknoten (150), der dem ersten Land oder der ersten geografischen Region zugewiesen ist, zu verbinden, und wobei für den Fall, dass das fahrzeuginterne System (20) in dem zweiten Land oder der zweiten geografischen Region verwendet wird, das Notfall-USIM-Profil verwendet wird, um das fahrzeuginterne System (20) mit einer zweiten Notfallbearbeitungsinstanz oder einem zweiten Notfallbearbeitungsknoten (250) zu verbinden, der dem zweiten Land oder der zweiten geografischen Region zugewiesen ist.

3. Verfahren nach einem der vorangehenden Ansprüche, wobei das fahrzeuginterne System (20), während es sich in dem zweiten Land oder der zweiten geografischen Region befindet, regulatorisch verpflichtet ist, das zweite USIM-Profil (242) zu verwenden, um eine Verbindung mit der zweiten Notfallbearbeitungsinstanz oder dem zweiten Notfallbearbeitungsknoten (250) herzustellen.

4. Verfahren nach einem der vorangehenden Ansprüche, wobei das erste USIM-Profil (241) - zusätzlich zu seiner Initialisierung oder Vorbereitung oder Aktivierung zum Zweck der Verwendung durch das fahrzeuginterne System (20) als das Notruf-USIM-Profil - auch initialisiert oder vorbereitet oder aktiviert wird, um durch das fahrzeuginterne System (20) als ein kommerzielles USIM-Profil verwendet zu werden, wobei dieses kommerzielle USIM-Profil für den Fall verwendet wird, dass insbesondere ein kommerzieller Datenaustausch oder ein kommerzieller Ruf durch das fahrzeuginterne System (20) initiiert wird oder initiiert werden muss, um das fahrzeuginterne System (20) mit einer Dienstanbieterinstanz oder einem Dienstanbieterknoten (160) zu verbinden.

5. Verfahren nach einem der vorangehenden Ansprüche, wobei das mindestens eine sichere Element (24) entweder ein drittes USIM-Profil (243) umfasst oder durch ein drittes USIM-Profil (243) bereitgestellt wird oder ein drittes USIM-Profil (243) empfängt, wobei das dritte USIM-Profil (243) initialisiert oder vorbereitet oder aktiviert wird, um durch das fahrzeuginterne System (20) als ein kommerzielles USIM-Profil zu verwenden, wobei dieses kommerzielle USIM-Profil für den Fall verwendet wird, dass insbesondere ein kommerzieller Datenaustausch oder ein kommerzieller Ruf durch das fahrzeuginterne System (20) initiiert wird oder initiiert werden muss, um das fahrzeuginterne System (20) mit einer Dienstanbieterinstanz oder einem Dienstanbieterknoten (160) zu verbinden.

6. Verfahren nach einem der vorangehenden Ansprüche, wobei das fahrzeuginterne System (20), insbesondere das sichere Element (24) des fahrzeuginternen Systems (20), eine Information, insbesondere in Form einer Zuordnungstabelle, umfasst, wobei mehrere verschiedene USIM-Profile, die als Notfall-USIM-Profile zu verwenden sind, mehreren verschiedenen Ländern oder geographischen Regionen innerhalb eines Landes zugeordnet sind, wobei insbesondere in dieser Zuordnungstabelle ein USIM-Profil mehreren verschiedenen Ländern oder geographischen Regionen zugeordnet ist und ein weiteres USIM-Profil einem Land oder einer geographischen Regionen zugeordnet ist, wo die Verwendung des weiteren USIM-Profils regulatorisch vorgeschrieben ist.

7. Verfahren nach einem der vorangehenden Ansprüche, wobei die Auswahl des zweiten USIM-Profils (242) aus mehreren verschiedenen USIM-Profilen von einer Zeitstempelinformation abhängig ist.

8. Verfahren nach einem der vorangehenden Ansprüche, wobei das Bestimmen des Annäherns an das, oder des Eintretens in das, zweite Land oder die zweite geografische Region auf mindestens einem der folgenden Ereignisse oder Informationen basiert:
- das fahrzeuginterne System (20) detektiert das Vorhandensein oder die Verfügbarkeit des zweiten lokalen Zugangsnetzes (210) oder des zweiten Mobilkommunikationsnetzes (200), insbesondere anhand der entsprechenden PLMN-ID-Informationen, der Identitätsinformationen des öffentlichen terrestrischen Mobilfunknetzes,
- das fahrzeuginterne System (20) verbindet sich mit dem zweiten lokalen Zugangsnetz (210) oder dem zweiten Mobilkommunikationsnetz (200),
- die mit Hilfe eines globalen Navigationssatellitensystems ermittelte Position des fahrzeuginternen Systems (20) gibt an, dass sich das fahrzeuginterne System (20) entweder dem zweiten Land oder der zweiten geografischen Region nähert oder dass das fahrzeuginterne System (20) in das zweite Land oder die zweite geografische Region eintritt.

9. Verfahren nach einem der vorangehenden Ansprüche, wobei das Initialisieren oder Vorbereiten oder Aktivieren des zweiten USIM-Profils (242) und das Deaktivieren des ersten USIM-Profils (241) nur durch das Bestimmen, dass sich das fahrzeuginterne Systems (20) dem zweiten Land oder der zweiten geografischen Region nähert oder in das zweite Land oder die zweite geografische Region eintritt, ausgelöst wird und insbesondere nicht erfordert, dass tatsächlich ein Notruf initiiert wird oder initiiert werden muss, wie dies insbesondere der Fall ist, wenn ein Unfall geschieht.

10. Verfahren nach einem der vorangehenden Ansprüche, wobei die Entscheidung, dass sich das fahrzeuginterne System (20) dem zweiten Land oder der zweiten geografischen Region nähert oder in das zweite Land oder die zweite geografische Region eintritt, entweder getroffen durch:
- das Identitätsmodul (22) und/oder das sichere Element (24), insbesondere die Embedded Universal Integrated Circuit Card (eUlCC) des fahrzeuginternen Systems (20), und/oder
- das fahrzeuginterne System (20) oder seine Mobilausrüstung und/oder
- eine Anwendung, die in dem fahrzeuginternen System (20) oder seiner Mobilausrüstung läuft, und
wobei diese Entscheidung, ob sich das fahrzeuginterne Systems (20) dem zweiten Land oder der zweiten geografischen Region nähert oder in das zweite Land oder die zweite Region eintritt, getroffen werden kann, während sich das fahrzeuginterne System (20) oder seine Mobilausrüstung entweder im Ruhemodus oder im aktiven Zustand befindet.

11. Fahrzeuginternes System (20), das in mindestens einem ersten und einem zweiten Land oder einer ersten und einer zweiten geografischen Region innerhalb eines Landes zu verwenden ist, wobei das fahrzeuginterne System (20) mindestens ein Identitätsmodul (22) mit mindestens einem sicheren Element (24) umfasst, wobei das mindestens eine sichere Element (24) ein oder mehrere USIM-Profile umfasst, wobei jedes dieser USIM-Profile durch einen entsprechenden Integrated Circuit Card Identifier (ICCID) eindeutig identifiziert wird, wobei das mindestens eine sichere Element (24) mindestens ein erstes Universal Subscriber Identity Module (USIM)-Profil (241) umfasst,
wobei mindestens ein USIM-Profil als ein designiertes Notfall-USIM-Profil verwendet wird, wobei, wobei dieses Notfall-USIM-Profil für den Fall verwendet wird, dass ein Notruf durch das fahrzeuginterne System (20) initiiert wird oder initiiert werden muss, um das fahrzeuginterne System (20) mit einer Notfallbearbeitungsinstanz oder einem Notfallbearbeitungsknoten zu verbinden, wobei das fahrzeuginterne System (20) folgendermaßen eingerichtet ist: für den Fall, dass das fahrzeuginterne System (20) in dem ersten Land oder der ersten geografischen Region verwendet wird, wird das erste USIM-Profil (241) initialisiert oder vorbereitet oder aktiviert, um durch das fahrzeuginterne System (20) als das Notfall-USIM-Profil verwendet zu werden, und für den Fall, dass das fahrzeuginterne System (20) in dem zweiten Land oder der zweiten geografischen Region verwendet wird, wird ein zweites USIM-Profil (242) initialisiert oder vorbereitet oder aktiviert, um durch das fahrzeuginterne System (20) als das Notfall-USIM-Profil verwendet zu werden,
wobei das zweite USIM-Profil (242) durch das fahrzeuginterne System (20) empfangen wird, wenn sich das fahrzeuginterne System (20) dem zweiten Land oder der zweiten geografischen Region nähert oder in das zweite Land oder die zweite geografische Region eintritt,
wobei das fahrzeuginterne System (20) so eingerichtet ist, dass:
- die Annäherung an, oder der Eintritt in, das zweite Land oder die zweite geografische Region durch das fahrzeuginterne System (20) bestimmt wird,
- das empfangene zweite USIM-Profil (242) initialisiert oder vorbereitet oder aktiviert wird, um durch das fahrzeuginterne System (20) als das Notfall-USIM-Profil verwendet zu werden, und das erste USIM-Profil (241) deaktiviert wird, um als das Notfall-USIM-Profil verwendet zu werden.

12. Programm, das einen computerlesbaren Programmcode umfasst, der, wenn er auf einem Computer oder in einem Identitätsmodul (22) und/oder in einem sicheren Element (24) eines fahrzeuginternen Systems (20) und/oder in einem fahrzeuginternen System (20) oder seiner Mobilausrüstung ausgeführt wird, den Computer oder das Identitätsmodul (22) oder das sichere Element (24) oder das fahrzeuginterne System (20) veranlasst, ein Verfahren nach einem der Ansprüche 1 bis 10 durchzuführen.

13. Computerprogrammprodukt zum Verwenden eines fahrzeuginternen Systems (20) in mindestens einem ersten und einem zweiten Land oder einer ersten und einer zweiten geografischen Region innerhalb eines Landes, wobei das Computerprogrammprodukt ein in einem Speichermedium gespeichertes Computerprogramm umfasst, wobei das Computerprogramm Programmcode umfasst, der, wenn er auf einem Computer oder in einem Identitätsmodul (22) und/oder in einem sicheren Element (24) eines fahrzeuginternen Systems (20) und/oder in einem fahrzeuginternen System (20) oder seiner Mobilausrüstung ausgeführt wird, den Computer oder das Identitätsmodul (22) oder das sichere Element (24) oder das fahrzeuginterne System (20) veranlasst, ein Verfahren nach einem der Ansprüche 1 bis 10 durchzuführen.

## Revendications

1. Procédé d'utilisation d'un système embarqué (20), dans au moins un premier et un second pays ou une première et une seconde région géographique à l'intérieur d'un pays,
dans lequel le système embarqué (20) comprend au moins un module d'identité (22) doté d'au moins un élément sécurisé (24), l'au moins un élément sécurisé (24) comprenant un profil USIM ou une pluralité de profils USIM, chacun de ces profils USIM étant identifié de façon unique par un identificateur de carte à circuit intégré (ICCID *-integrated circuit card identifier)* correspondant, dans lequel l'au moins un élément sécurisé (24) comprend au moins un premier profil USIM (241), profil de module d'identité universelle d'abonné *(universal subscriber identify module),*
dans lequel au moins un profil USIM est utilisé comme profil USIM d'urgence désigné, ce profil USIM d'urgence étant utilisé dans le cas où un appel d'urgence est lancé ou doit être lancé par le système embarqué (20), pour connecter le système embarqué (20) à une instance de gestion des urgences ou à un nœud de gestion des urgences,
dans lequel, dans le cas où le système embarqué (20) est utilisé dans le premier pays ou la première région géographique, le premier profil USIM (241) est initialisé ou préparé ou activé pour être utilisé, par le système embarqué (20), en tant que profil USIM d'urgence,
dans lequel, dans le cas où le système embarqué (20) est utilisé dans le second pays ou la seconde région géographique, un deuxième profil USIM (242) est initialisé ou préparé ou activé pour être utilisé, par le système embarqué (20), en tant que profil USIM d'urgence, le deuxième profil USIM (242) étant reçu par le système embarqué (20) dès que le système embarqué (20) s'approche du second pays ou de la seconde région géographique ou y entre,
le procédé comprenant les étapes suivantes :
- dans une première étape, l'approche de l'entrée ou l'entrée dans le second pays ou la seconde région géographique par le système embarqué (20) est déterminée,
- dans une seconde étape faisant suite à la première étape, le deuxième profil USIM (242) reçu est initialisé ou préparé ou activé pour être utilisé, par le système embarqué (20), en tant que profil USIM d'urgence, et le premier profil USIM (241) est désactivé pour une utilisation en tant profil USIM d'urgence.

2. Procédé selon la revendication 1, dans lequel, dans le cas où le système embarqué (20) est utilisé dans le premier pays ou la première région géographique, le profil USIM d'urgence est utilisé pour connecter le système embarqué (20) à une première instance de gestion des urgences ou à un premier nœud de gestion des urgences (150) attribué(e) au premier pays ou à la première région géographique, et dans lequel, dans le cas où le système embarqué (20) est utilisé dans le second pays ou la seconde région géographique, le profil USIM d'urgence est utilisé pour connecter le système embarqué (20) à une seconde instance de gestion des urgences ou à un second nœud de gestion des urgences (250) attribué(e) au second pays ou à la seconde région géographique.

3. Procédé selon l'une des revendications précédentes, dans lequel le système embarqué (20), tandis qu'il se trouve dans le second pays ou la seconde région géographique, est tenu réglementairement d'utiliser le deuxième profil USIM (242) afin de se connecter à la seconde instance de gestion des urgences ou au second nœud de gestion des urgences (250).

4. Procédé selon l'une des revendications précédentes, dans lequel le premier profil USIM (241) est, en plus d'être initialisé ou préparé ou activé pour être utilisé, par le système embarqué (20), en tant que profil USIM d'urgence, également initialisé ou préparé ou activé pour être utilisé, par le système embarqué (20), en tant que profil USIM commercial, ce profil USIM commercial étant utilisé dans le cas où en particulier un échange commercial de données ou un appel commercial est lancé ou doit être lancé par le système embarqué (20), pour connecter le système embarqué (20) à une instance de fourniture de services ou un nœud de fourniture de services (160).

5. Procédé selon l'une des revendications précédentes, dans lequel soit l'au moins un élément sécurisé (24) comprend un troisième profil USIM (243) soit il se voit fournir ou reçoit un troisième profil USIM (243), dans lequel le troisième profil USIM (243) est initialisé ou préparé ou activé pour être utilisé, par le système embarqué (20), en tant que profil USIM commercial, ce profil USIM commercial étant utilisé dans le cas où en particulier un échange commercial de données ou un appel commercial est lancé ou doit être lancé par le système embarqué (20), pour connecter le système embarqué (20) à une instance de fourniture de services ou un nœud de fourniture de services (160).

6. Procédé selon l'une des revendications précédentes, dans lequel le système embarqué (20), en particulier l'élément sécurisé (24) du système embarqué (20), comprend des informations, en particulier sous la forme d'une table d'attribution, dans lequel une pluralité de différents profils USIM, à utiliser comme profils USIM d'urgence, est attribuée à une pluralité de différent(e)s pays ou régions géographiques à l'intérieur d'un pays, dans lequel, en particulier, dans cette table d'attribution, un profil USIM est attribué à une pluralité de différent(e)s pays ou régions géographiques, et un autre profil USIM est attribué à un pays ou une région géographique où l'utilisation de l'autre profil USIM est réglementairement requise.

7. Procédé selon l'une des revendications précédentes, dans lequel le choix du deuxième profil USIM (242) parmi une pluralité de différents profils USIM est fonction d'une information d'horodatage.

8. Procédé selon l'une des revendications précédentes, dans lequel la détermination soit de l'approche de l'entrée soit de l'entrée dans le second pays ou la seconde région géographique est fondée sur au moins l'un des événements ou éléments d'information suivants :
- le système embarqué (20) détecte la présence ou la disponibilité du second réseau d'accès local (210) ou du second réseau de communications mobiles (200), en particulier au moyen de l'information correspondante d'identité de réseau mobile terrestre public (RMTP),
- le système embarqué (20) se connecte au second réseau d'accès local (210) ou au second réseau de communications mobiles (200),
- la position du système embarqué (20) obtenue à l'aide d'un système mondial de navigation par satellite indique soit que le système embarqué (20) s'approche du second pays ou de la seconde région géographique soit que le système embarqué (20) entre dans le second pays ou la seconde région géographique.

9. Procédé selon l'une des revendications précédentes, dans lequel l'initialisation ou la préparation ou l'activation du deuxième profil USIM (242), et la désactivation du premier profil USIM (241) sont déclenchées par la seule détermination de ce que le système embarqué (20) s'approche de l'entrée ou entre dans le second pays ou la seconde région géographique, et en particulier ne nécessitent pas qu'un appel d'urgence soit réellement lancé ou doive être lancé, comme c'est en particulier le cas si un accident se produit.

10. Procédé selon l'une des revendications précédentes, dans lequel la décision selon laquelle le système embarqué (20) soit s'approche de l'entrée soit entre dans le second pays ou la seconde région géographique est prise par :
- le module d'identité (22) et/ou l'élément sécurisé (24), en particulier la carte à circuit intégré universel embarquée (eUICC - *embedded universal integrated circuit card),* du système embarqué (20), et/ou
- le système embarqué (20) ou son équipement mobile, et/ou
- une application exécutée sur le système embarqué (20) ou son équipement mobile, et dans lequel cette décision selon laquelle le système embarqué (20) soit s'approche de l'entrée soit entre dans le second pays ou la seconde région géographique peut être prise tandis que le système embarqué (20) ou son équipement mobile se trouve soit dans le mode sommeil soit à l'état actif.

11. Système embarqué (20) à utiliser dans au moins un premier et un second pays ou une première et une seconde région géographique à l'intérieur d'un pays,
dans lequel le système embarqué (20) comprend au moins un module d'identité (22) doté d'au moins un élément sécurisé (24), l'au moins un élément sécurisé (24) comprenant un profil USIM ou une pluralité de profils USIM, chacun de ces profils USIM étant identifié de façon unique par un identificateur de carte à circuit intégré (ICCID) correspondant, dans lequel l'au moins un élément sécurisé (24) comprend au moins un premier profil USIM (241), profil de module d'identité universelle d'abonné,
dans lequel au moins un profil USIM est utilisé en tant que profil USIM d'urgence désigné, ce profil USIM d'urgence étant utilisé dans le cas où un appel d'urgence est lancé ou doit être lancé par le système embarqué (20), pour connecter le système embarqué (20) à une instance de gestion des urgences ou à un nœud de gestion des urgences, dans lequel, le système embarqué est configuré de telle sorte que :
dans le cas où le système embarqué (20) est utilisé dans le premier pays ou la première région géographique, le premier profil USIM (241) soit initialisé ou préparé ou activé pour être utilisé, par le système embarqué (20), en tant que profil USIM d'urgence, et dans le cas où le système embarqué (20) est utilisé dans le second pays ou la seconde région géographique, un deuxième profil USIM (242) soit initialisé ou préparé ou activé pour être utilisé, par le système embarqué (20), en tant que profil USIM d'urgence, le deuxième profil USIM (242) étant reçu par le système embarqué (20) dès que le système embarqué (20) s'approche du second pays ou de la seconde région géographique ou y entre,
dans lequel le système embarqué (20) est configuré de telle sorte que :
- l'approche de l'entrée ou l'entrée dans le second pays ou la seconde région géographique par le système embarqué (20) soit déterminée,
- le second profil USIM (242) reçu soit initialisé ou préparé ou activé pour être utilisé, par le système embarqué (20), en tant que profil USIM d'urgence, et le premier profil USIM (241) soit désactivé pour une utilisation en tant profil USIM d'urgence.

12. Programme comprenant un code de programme lisible par ordinateur, qui, lorsqu'il est exécuté sur un ordinateur ou sur un module d'identité (22) et/ou sur un élément sécurisé (24) de système embarqué (20) et/ou dans un système embarqué (20) ou son équipement mobile, fait mettre en œuvre à l'ordinateur ou au module d'identité (22) ou à l'élément sécurisé (24) ou au système embarqué (20) un procédé selon l'une des revendications 1 à 10.

13. Produit-programme informatique destiné à être utilisé dans un système embarqué (20) dans au moins un premier et un second pays ou une première et une seconde région géographique à l'intérieur d'un pays, le produit-programme informatique comprenant un programme informatique stocké sur un support d'enregistrement, le programme informatique comprenant un code de programme qui, lorsqu'il est exécuté sur un ordinateur ou sur un module d'identité (22) et/ou sur un élément sécurisé (24) de système embarqué (20) et/ou dans un système embarqué (20) ou son équipement mobile, fait mettre en œuvre à l'ordinateur ou au module d'identité (22) ou à l'élément sécurisé (24) ou au système embarqué (20) un procédé selon l'une des revendications 1 à 10.
